# DEMANDE DE BREVET EUROPEEN

(11) **EP 1 053 896 A1**
(43) Date de publication de la demande: **22.11.2000**
(21) Numéro de dépôt: 00201747.3
(22) Date de dépôt: 15.05.2000
(51) Int. Cl.: B60G 17/015, B60G 21/10, B60G 21/073

(54) **Dispositif pour virer avec une voiture automobil, à quatre roues**

(30) Priorité: 17.05.1999 IT GE990052
(71) Demandeur: Arscone Luigi, 16131 Genova (IT)
(72) Inventeur: Arscone Luigi, 16131 Genova (IT)

(57) **Abrégé**

Dispositif hydraulique qui agit sur les roues antérieures et postérieures et permit a l'automobile de virer avec facilité et de reduire l'effet de la force centrifuge et l'accelération laterale.

## Description

La présente invention a pour objet la modification de la timonerie de direction et des amortisseurs antérieurs et postérieurs des voitures d'une façon qu'elle virent ,en déschargeant le poid propre et du trasporté appuyant principalement sur trois roues , celles postérieures et celle antérieure opposé au virage à faire.

Actuellement la timonerie de direction d'une automobile joue sur la direction des roues qui suivent la direction du virage.

Le poids même de la voiture et du transporté pèse sur l'amortisseurs qui, faut incliner le corps de la voiture au sens contraire du virage sait-il à gauche ou bien à droite.

Par le dispositif à virer le chassis de la voiture va tourner à droite pour le virage à droite et à gauche pour les virages à gauche.

On peut obtenir ce dispositif de virage enjouant avec deux pistons à double effet amortissés qui remplacent les armortisseurs antérieurs et deux pistons à double effet de dimension plus petites qui aident les antérieurs.

Les pistons à double effet seront commandés par la timonerie de direction, qui , selon la

Direction du virage va commander l'ouverture d'une soupape de la centrale hydraulique.

Pour le fonctionnement il faudra une moteur electrique, une pompe hydraulique, une centrale avec le reservoir de l'huile et leurs memes tuyautages.

Voyons maintenant le fonctionnement : en conduisant en ligne droite , en tournant le volant à droite pour une virage à droite , le piston amortissé qui agit sur la roue à gauche antérieure va s'allonger, celui sur la roue à droite va s'accourcir et au contraire pour les virages à gauche la voiture s'inclinera dans la direction du virage sans aucune accelération laterale , le poids reste sur le même axe avec le corps de l'automobile, de haut en bas, au lieu d' etre deplacé à droite et à gauche.

Le confort est toujours le même pour l' amortisseur present dans le piston , dans les manouvres a basse vitesse (stationements), on pourra , en exclueant les pistons des roues postérieures , en soulevant la roue intérieure au virage , tourner avec un mineur rayon de virage et un mineur frottement des pneus.

Le dispositif sera géré par un système électronique qui , à hautes vitesses pourra detérminer le carrossage dans le virage en fonction de la vitesse, de l'accelération laterale , de la vitesse du braquage et qui pourra émettre un signal acoustique chaque fois que l'on surpassera une déterminèe valeur limite de l'accelération lateralle.

En plus le système électronique pourra être branché ou debranché avant au après une vitesse determinée avec le système debranché l'automobile aura les meme caractéristiques d'une voiture àproduction normale.

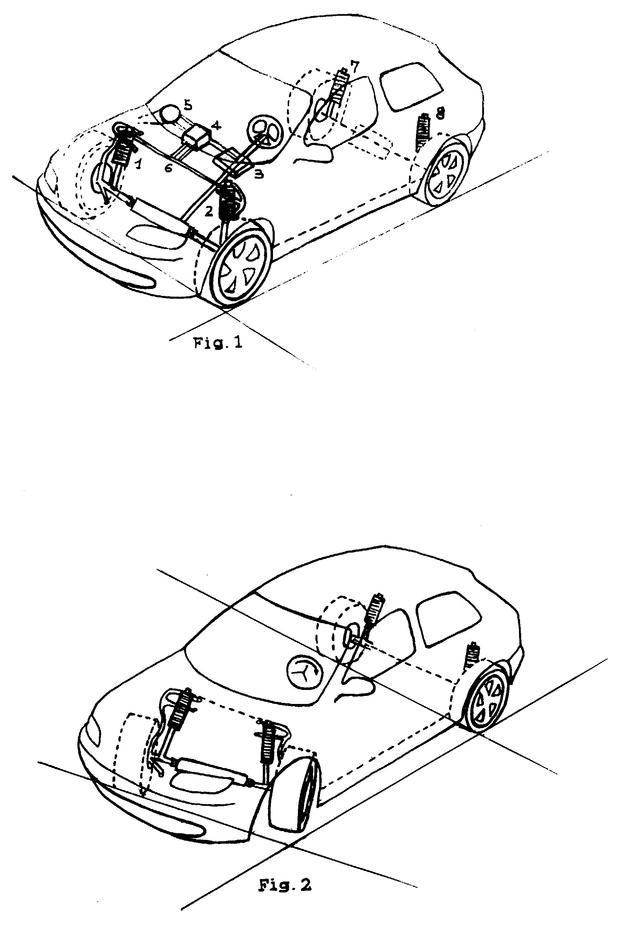

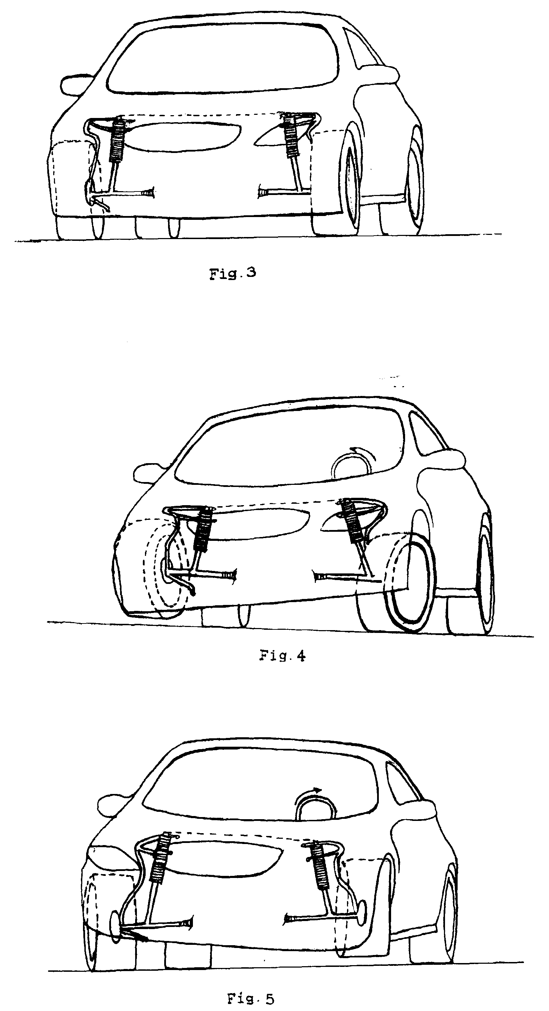

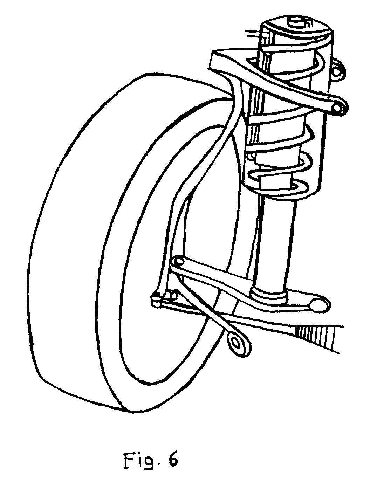

## Revendications

1. Confort dans les virages : les passagers et le conduissant n' éprouvent aucun effet par l'accelération laterale , ils ne sont pas poussés vers l'extérieur et ils ressentent une sensation agréablee de virage surélevé.

2. Stationement plus facile , on vire avec un mineur rayon de braquage perce que la roue intérieure au virage , qui est surlevée , ne pousse plus l'automobile vers l'extérieur.

3. Virages plus surs et rapides , mineur danger de s' ébarder.
